# EUROPEAN PATENT SPECIFICATION

(11) **EP 3 822 947 B1**
(45) Date of publication and mention of the grant of the patent: **22.11.2023**
(21) Application number: 19209739.2
(22) Date of filing: 18.11.2019
(51) Int. Cl.: G08G 1/16, B60W 30/18, B60W 50/14

(54) **OVERTAKING OF VEHICLES TRAVELLING ON THE SAME ROAD**
ÜBERHOLEN VON FAHRZEUGEN, DIE AUF DER GLEICHEN STRASSE FAHREN
DÉPASSEMENT DE VÉHICULES CIRCULANT SUR LA MÊME ROUTE

(43) Date of publication of application: 19.05.2021
(73) Proprietor: Ningbo Geely Automobile Research & Development Co. Ltd., Hangzhou Bay New District Ningbo 315336 (CN)
(72) Inventor: LINDBERG NILSSON, Erik, 417 47 GÖTEBORG (SE); SETTERBERG, Johan, 416 79 GÖTEBORG (SE)
(74) Representative: Zacco Sweden AB

(56) References cited:
- EP-A1- 3 406 500
- WO-A1-2014/168557
- DE-A1- 10 160 900
- DE-A1-102018 004 573
- US-A1- 2017 334 454
- US-A1- 2019 263 401

## Description

### TECHNICAL FIELD

The present disclosure relates generally to the field of overtaking. More particularly, it relates to enabling a safe and smooth overtaking when a first and second vehicle travel on the same road.

### BACKGROUND

It is known for drivers of vehicles to assess an overtaking situation e.g. via the rear or the side mirrors and execute an attempt of overtaking according to the assessment.

A first drawback of driver assessed overtaking attempts is that the driver may have misjudged the overtaking situation rendering the overtaking not safe nor smooth.

A second drawback of driver assessed overtaking attempts is that planning of overtaking is not efficient.

A third drawback of driver assessed overtaking attempts is that fuel economy is negatively impacted.

Therefore, there is a need for alternative approaches to overtaking of vehicles travelling on the same road.

US 2017/334454 A1 discloses a method for enabling a safe and smooth and fuel saving overtaking comprising the steps of the preamble of claim 1.

### SUMMARY

It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product; e.g., an apparatus. The physical product may comprise one or more parts, such as controlling circuitry in the form of one or more controllers, one or more processors, or the like.

An object of some embodiments is to provide alternative approaches to overtaking of vehicles travelling on the same road.

According to a first aspect, this is achieved by a method for enabling a safe and smooth overtaking when a first and second vehicle travel on the same road.

The method comprises the steps of claim 1.

An advantage of some embodiments is that a method for enabling a safe and smooth overtaking when a first and second vehicle travel on the same road is provided.

Another advantage of some embodiments is that the method for enabling a safe and smooth overtaking when a first and second vehicle travel on the same road reduces the risk for misjudging an overtaking situation.

Yet an advantage of some embodiments is that the method for enabling a safe and smooth overtaking when a first and second vehicle travel on the same road provides a safe and smooth overtaking even if adaptive cruise control (ACC) or cruise control are not used.

Yet an advantage of some embodiments is that the method for enabling a safe and smooth overtaking when a first and second vehicle travel on the same road enables efficient planning of overtaking.

Yet an advantage of some embodiments is that the method for enabling a safe and smooth overtaking when a first and second vehicle travel on the same road minimizes the number of overtakings, for the first and second vehicle but also for other vehicles travelling on the same road, as efficient planning of overtaking is enabled.

Yet an advantage of some embodiments is that the method for enabling a safe and smooth overtaking when a first and second vehicle travel on the same road positively impacts fuel economy.

Yet an advantage of some embodiments is that the method for enabling a safe and smooth overtaking when a first and second vehicle travel on the same road increases security as the number of overtakings are minimized, especially overtakings involving utilizing an oncoming traffic lane.

Yet an advantage of some embodiments is that the method for enabling a safe and smooth overtaking when a first and second vehicle travel on the same road reduces a risk of quick deceleration that also improves fuel economy.

Yet an advantage of some examples not covered by the claims is that the method for enabling a safe and smooth overtaking when a first and second vehicle travel on the same road enables autonomous vehicles to determine how to position the autonomous vehicle in relation to other vehicles in an overtaking situation, e.g. to determine when the autonomous vehicle should complete an overtaking process, position the autonomous vehicle in an appropriate position in relation to other vehicles, and maintain the appropriate speed in relation to other vehicles even when the autonomous vehicle changes speed during the overtaking.

In some embodiments, the method further comprises repeating the determining of the speed and communicating the determined speed so that a real-time update of the speed of the second vehicle is communicated by the display in the first vehicle.

An advantage of some embodiments may be that the real-time update provides a communication of the current speed of the vehicle in front of or behind of and/or the vehicle at a side and therefore improves the execution of the overtaking.

In some embodiments, the second vehicle is in front of or behind of and/or at a side of the first vehicle.

An advantage of some embodiments may be that the second vehicle may be present in the same lane or in another lane than the first vehicle and still be determinable in terms of speed. In some embodiments, the determining of the speed and communicating the determined speed are repeated for a plurality of vehicles in front of or behind of and/or at a side of the first vehicle. An advantage of some embodiments may be that the plurality of vehicles may be present in the same lane and/or in another lane than the first vehicle and still be determinable individually in terms of speed in a real-time update.

In some embodiments, the real-time update of the speed of the second vehicle is communicated during overtaking.

An advantage of some embodiments may be that the overtaking is performed in a safe and smooth manner.

According to the invention the method further comprises determining, by controlling circuitry in the first vehicle configured for predicting a position, a predicted position for the first vehicle in relation to the second vehicle before or during overtaking wherein the predicted position enables the first vehicle to maintain the speed the first vehicle had before overtaking.

An advantage of the invention is that the overtaking may be efficiently planned as the predicted position provides the first vehicle the position where the speed of the first vehicle before the overtaking started may be maintained.

The method further comprises communicating, by a display in the first vehicle, the determined predicted position for the first vehicle.

An advantage of of the invention is that the driver of the first vehicle is made aware of the determined predicted position for the first vehicle so that the driver may execute the overtaking and position the vehicle according to the communicated position.

In some embodiments, the method further comprises obtaining, by a radar arranged on the first vehicle, a distance to the second vehicle in front of or behind of and/or at a side of the first vehicle at a first point in time and at a second point in time, and determining, by a speedometer arranged on the first vehicle, the speed of the first vehicle.

An advantage of some embodiments may be that the speed of the second vehicle may be determined based on the obtained distance to the second vehicle and the determined speed of the first vehicle from sensor data.

In some embodiments, the method further comprises obtaining, by controlling circuitry in the first vehicle configured to obtain a position through vehicle-to-vehicle communication, a distance to the second vehicle in front of or behind of and/or at a side of the first vehicle, and determining, by controlling circuitry in the first vehicle configured to determine a speed through GPS, the speed of the first vehicle.

An advantage of some embodiments may be that the speed of the second vehicle may be determined based on the obtained distance to the second vehicle and the determined speed of the first vehicle from communication data.

In some embodiments, the method further comprises determining, by controlling circuitry in the first vehicle configured for calculating a speed, a speed of the second vehicle based on the obtained distance to the second vehicle and the determined speed of the first vehicle.

An advantage of some embodiments may be that the speed of the second vehicle may be determined for communication in a display in the first vehicle.

A second aspect is a computer program product comprising a non-transitory computer readable medium, having thereon a computer program comprising program instructions, the computer program being loadable into a data processing unit and configured to cause execution of the method steps according to the first aspect when the computer program is run by the data processing unit.

A third aspect is an apparatus for enabling a safe and smooth overtaking when a first and second vehicle travel on the same road.

The apparatus comprises the features of claim 9.

An advantage of some embodiments is that an apparatus for enabling a safe and smooth overtaking when a first and second vehicle travel on the same road is provided.

Another advantage of some embodiments is that the apparatus for enabling a safe and smooth overtaking when a first and second vehicle travel on the same road provides a safe and smooth overtaking even if ACC or cruise control are not used.

Yet an advantage of some embodiments is that the apparatus for enabling a safe and smooth overtaking when a first and second vehicle travel on the same road enables efficient planning of overtaking.

Yet an advantage of some embodiments is that the apparatus for enabling a safe and smooth overtaking when a first and second vehicle travel on the same road minimizes the number of overtakings, for the first and second vehicle but also for other vehicles travelling on the same road, as efficient planning of overtaking is enabled.

Yet an advantage of some embodiments is that the apparatus for enabling a safe and smooth overtaking when a first and second vehicle travel on the same road positively impacts fuel economy.

Yet an advantage of some embodiments is that the apparatus for enabling a safe and smooth overtaking when a first and second vehicle travel on the same road increases security as the number of overtakings are minimized, especially overtakings involving utilizing an oncoming traffic lane.

Yet an advantage of some embodiments is that the apparatus for enabling a safe and smooth overtaking when a first and second vehicle travel on the same road reduces a risk of quick deceleration that also improves fuel economy.

Yet an advantage of some examples not covered by the claims is that the apparatus for enabling a safe and smooth overtaking when a first and second vehicle travel on the same road enables autonomous vehicles to determine how to position the autonomous vehicle in relation to other vehicles in an overtaking situation, e.g. to determine when the autonomous vehicle should complete an overtaking process, position the autonomous vehicle in an appropriate position in relation to other vehicles, and maintain the appropriate speed in relation to other vehicles even when the autonomous vehicle changes speed during the overtaking.

In some embodiments, the one or more processors are further configured to cause the apparatus to repeatedly determine the speed and communicate the determined speed so that a real-time update of the speed of the second vehicle is communicated by the display in the first vehicle.

An advantage of some embodiments may be that the real-time update provides a communication of the current speed of the vehicle in front of or behind of and/or the vehicle at a side and therefore improves the execution of the overtaking.

In some embodiments, the second vehicle is in front of or behind of and/or at a side of the first vehicle.

An advantage of some embodiments may be that the second vehicle may be present in the same lane or in another lane than the first vehicle and still be determinable in terms of speed. In some embodiments, the one or more processors are further configured to cause the apparatus to repeatedly determine the speed and communicate the speed for a plurality of vehicles in front of or behind of and/or at a side of the first vehicle.

An advantage of some embodiments may be that the plurality of vehicles may be present in the same lane and/or in another lane than the first vehicle and still be determinable individually in terms of speed in a real-time update.

In some embodiments, the real-time update of the speed of the second vehicle is communicated during overtaking.

An advantage of some embodiments may be that the overtaking is performed in a safe and smooth manner.

According to the invention the one or more processors are further configured to cause determination, by controlling circuitry in the first vehicle configured for predicting a position, of a predicted position for the first vehicle in relation to the second vehicle before or during overtaking wherein the predicted position enables the first vehicle to maintain the speed the first vehicle had before overtaking.

An advantage of of the invention is that the overtaking may be efficiently planned as the predicted position provides the first vehicle the position where the speed of the first vehicle before the overtaking started may be maintained.

The one or more processors are further configured to cause communication, by a display in the first vehicle, of the determined predicted position for the first vehicle.

An advantage of the invention is that the driver of the first vehicle is made aware of the determined predicted position for the first vehicle so that the driver may execute the overtaking and position the vehicle according to the communicated position.

A fourth aspect is a vehicle comprising the apparatus according to the third aspect.

Any of the above aspects may additionally have features identical with or corresponding to any of the various features as explained above for any of the other aspects.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1a is flowchart illustrating example method steps according to some embodiments;
Figure 1b is flowchart illustrating example method steps according to some embodiments;
Figure 1c is flowchart illustrating example method steps according to some embodiments;
Figure 2a is a schematic overview illustrating an example of vehicles travelling on the same road according to some embodiments;
Figure 2b is a schematic drawing illustrating an example display in a vehicle according to some embodiments;
Figure 3a is a schematic overview illustrating an example of vehicles travelling on the same road according to some embodiments;
Figure 3b is a schematic overview illustrating an example of vehicles travelling on the same road according to some embodiments;
Figure 4 is a schematic block diagram illustrating an example apparatus according to some embodiments; and
Figure 5 is a schematic drawing illustrating an example computer readable medium according to some embodiments.

### DETAILED DESCRIPTION

As already mentioned above, it should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

During an overtaking of vehicles travelling on the same road it can be difficult to determine when to end or to start the overtaking, especially if there are many vehicles that are passed with substantially the same speed, and to determine which vehicle to position behind if the speed during the overtaking is higher than the speed before starting the overtaking.

In the following, embodiments will be described where alternative approaches to overtaking of vehicles travelling on the same road are provided.

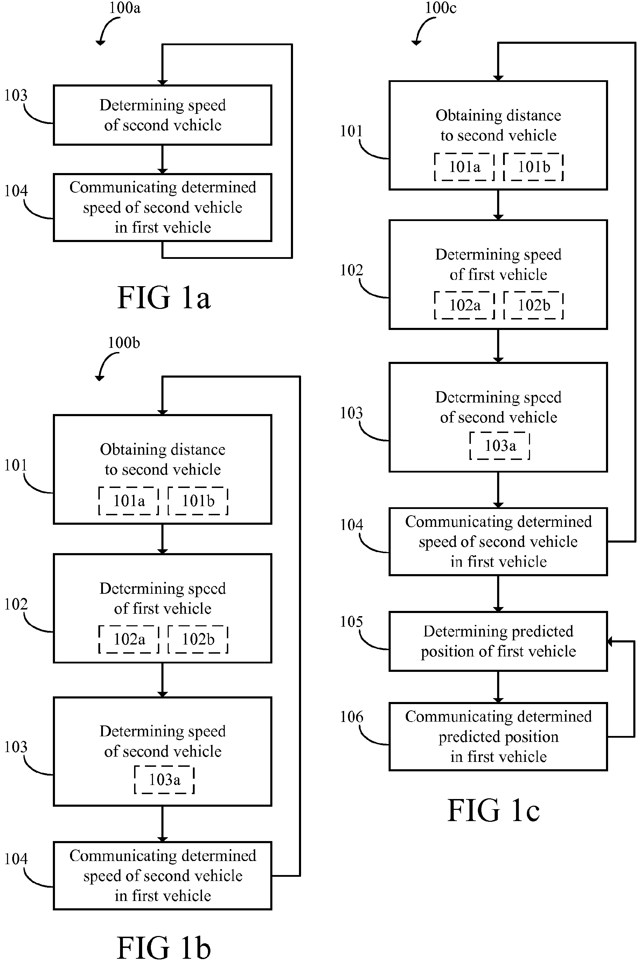

Figures 1a-c are flowcharts illustrating example method steps according to some embodiments.

The methods 100a-c are for enabling a safe and smooth overtaking when a first and second vehicle travel on the same road.

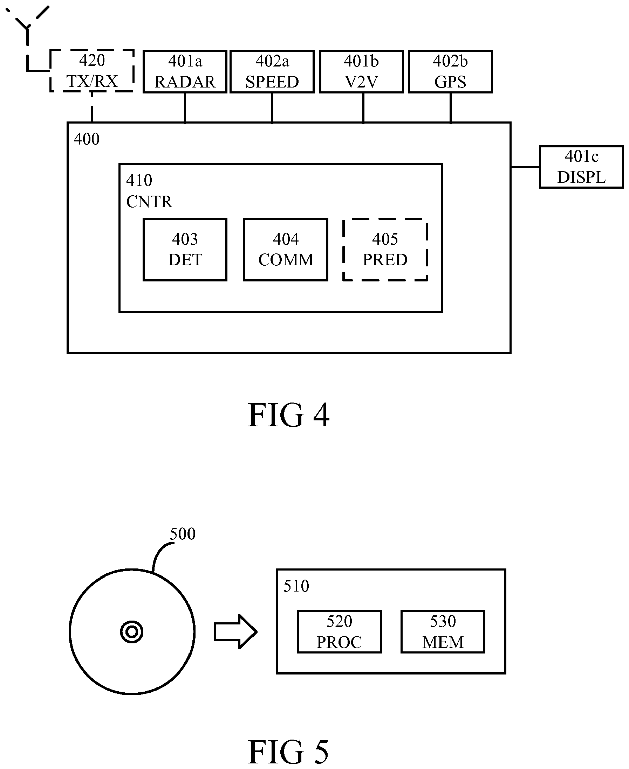

Thus, the methods 100a-c may, for example, be performed by the apparatus 400 of Figure 4 and/or the computer program 500 of Figure 5.

The methods 100a-c comprise corresponding method steps denoted by common reference numbers.

In step 101, in some embodiments, a distance to a second vehicle is obtained.

Alternatively or additionally, the obtainment of the distance to the second vehicle may be obtained by one of the first vehicle, by the second vehicle, by a completely different vehicle, and by a stationary roadside unit and thereafter communicated to the first vehicle.

In step 101a, in some embodiments, the distance to the second vehicle is obtained at a first point in time and at a second point in time by a radar arranged on the first vehicle.

For example, the second vehicle of which distance to is to be obtained may be in front of or behind of and/or at a side of the first vehicle, i.e. at any side of the vehicle.

For example, the radar may comprise at least one radar angled towards any one of the vehicles in front, the vehicles behind, and the vehicles you pass during overtaking.

In step 101b, in some embodiments, the distance to the second vehicle is obtained by controlling circuitry in the first vehicle configured to obtain a position through vehicle-to-vehicle communication.

For example, the second vehicle of which distance to is to be obtained may be in front of or behind of and/or at a side of the first vehicle, i.e. at any side of the vehicle.

For example, the obtained position may have been obtained by the second vehicle, e.g. via Global Positioning System (GPS), and transmitted to the first vehicle via vehicle-to-vehicle communication, e.g. V2V.

Alternatively or additionally, the vehicle-to-vehicle communication may comprise any vehicular communication systems in which vehicles and roadside units are communicating nodes, providing each other with information, and wherein both types of nodes are dedicated short-range communications (DSRC) devices.

In step 102a, in some embodiments, the speed of the first vehicle is determined by a speedometer arranged on the first vehicle.

Alternatively or additionally, the speed of the first vehicle may be determined based on any sensor data collected from a sensor arranged on the first vehicle.

In step 102b, in some embodiments, the speed of the first vehicle is determined by controlling circuitry in the first vehicle configured to determine a speed through GPS.

In step 103, a speed of the second vehicle is determined.

Alternatively or additionally, the speed of the second vehicle may be determined by any one of the first vehicle, by the second vehicle, by a completely different vehicle, and by a stationary roadside unit.

In step 103a, in some embodiments, a speed of the second vehicle is determined based on the obtained distance to the second vehicle and the determined speed of the first vehicle by controlling circuitry in the first vehicle configured for calculating a speed.

In step 104, the determined speed of the second vehicle is communicated by a display in the first vehicle.

Alternatively or additionally, a distance in time may be determined and communicated by the display in the first vehicle so that a real-time updated is provided before the overtaking. Alternatively or additionally, the display may comprise any display viewable by a driver of a vehicle e.g. a heads-up display, an electronic instrument cluster or digital instrument panel. Alternatively or additionally, the display may be configured to communicate the determined speed and/or the distance in time via image/video and/or audio.

In step 105, according to the invention a predicted position for the first vehicle in relation to the second vehicle is determined by controlling circuitry in the first vehicle configured for predicting a position before or during overtaking wherein the predicted position enables the first vehicle to maintain the speed the first vehicle had before overtaking.

For example, the predicted position may comprise an indication of a position wherein the vehicle may obtain and/or maintain the speed the vehicle had before starting the overtaking. Hence, the predicted position may be a position wherein the vehicles behind maintain a lower speed and the vehicles in front maintain a higher speed.

Alternatively or additionally, the predicted position may predicted based on communication data received from other vehicles on the same road in a vehicle-to-vehicle communication.

In step 106, according to the invention the determined predicted position for the first vehicle is communicated by a display in the first vehicle.

Additionally, the predicted position may comprise a position wherein the view of the road and road signs is not obstructed, e.g. by a truck in front, and wherein the prediction of that position may be based on data on vehicle type received from other vehicles on the same road in a vehicle-to-vehicle communication.

Alternatively or additionally, the display may comprise any display viewable by a driver of a vehicle e.g. a heads-up display, an electronic instrument cluster or digital instrument panel. Hence, the method step above enable a safe and smooth overtaking when a first and second vehicle travel on the same road as an efficient planning of overtaking is enabled.

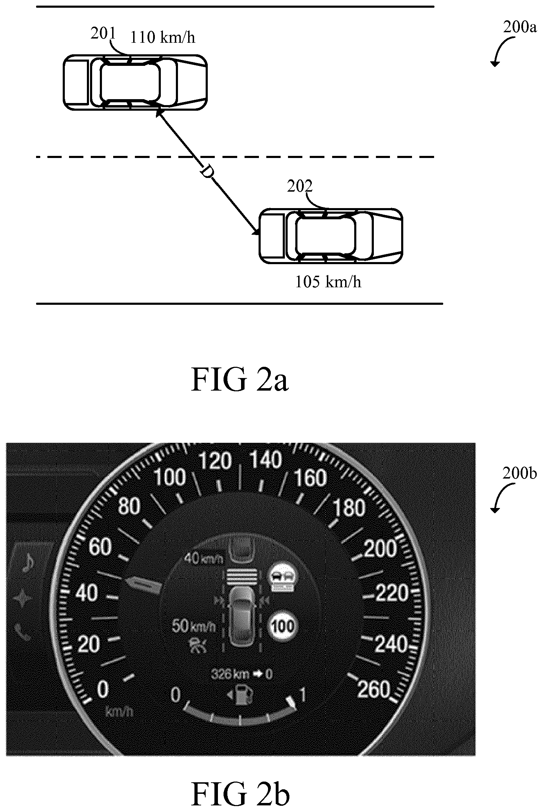

Figure 2a is a schematic overview illustrating an example of vehicles travelling on the same road according to some embodiments.

The example of vehicles 200a illustrates a safe and smooth overtaking when a first and second vehicle travel on the same road.

Thus, any of the vehicles in the example of vehicles 200a, 300a, 300b may, for example, comprise the apparatus 400 of Figure 4 and/or the computer program 500 of Figure 5 and perform any of the method steps of Figures 1a-c.

Figure 2a illustrates a first vehicle 201 travelling at 110 km/h, driving in the left lane, in the process of overtaking a second vehicle 202 travelling at 105 km/h, driving the right lane, wherein the first vehicle may comprise at least one radar angled towards the second vehicle 202 configured to obtain a distance D to the second vehicle 202 at a first point in time and at a second point in time and/or vehicle-to-vehicle communication controlling circuitry configured to receive, e.g. via V2V, an obtained position of the second vehicle 202 that may have been obtained by the second vehicle 202, e.g. via GPS.

The first vehicle 201 may further comprise a speedometer for determining speed or any other sensor capable of collecting and providing sensor data for determining speed of the first vehicle 201 and/or controlling circuitry in the first vehicle configured to determine, e.g. through GPS, a speed of the first vehicle, i.e. 110 km/h.

The first vehicle 201 may furthermore comprise controlling circuitry configured for calculating a speed of the second vehicle 202 based on the obtained distance D to the second vehicle and the determined speed of the first vehicle, i.e. 110 km/h.

The first vehicle may yet more comprise a display for communicating the speed of the second vehicle e.g. in real-time.

Figure 2b is a schematic drawing illustrating an example display in a vehicle according to some embodiments.

The example display 200b in a first vehicle illustrates a speed of a second vehicle before or during a safe and smooth overtaking when a first and second vehicle travel on the same road.

Thus, any of the vehicles in the example of vehicles 200a, 300a, 300b may, for example, comprise the display 200b and communicate a determined speed of a second vehicle or a predicted position of the first vehicle according to the method steps of Figures 1a-c.

Figure 2b illustrates the display 200b communicating the distance from the first vehicle 201 to the second vehicle 202 in number of seconds as white bars when approaching the second vehicle 202 from behind. The display 200b further communicates the actual speed of the second vehicle 202, i.e. 40 km/h, and the set speed (e.g. in a cruise control system) of the first vehicle 201, i.e. 50 km/h, on a road with a speed limit of 100 km/h.

The display 200b will communicate the actual speed of one or more second vehicles 202 as they are passed or about to be passed during overtaking e.g. in real-time, even when ACC is not activated.

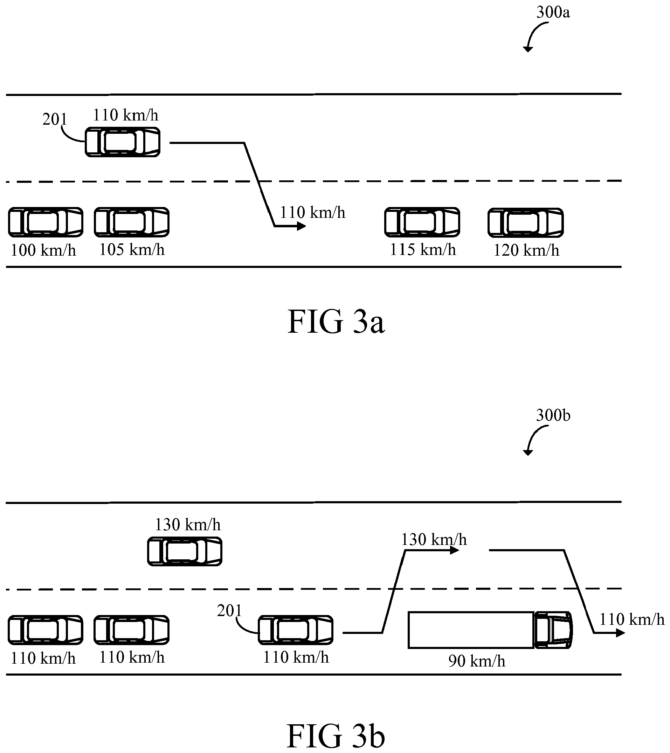

Figure 3a is a schematic overview illustrating an example of vehicles travelling on the same road according to some embodiments.

The example of vehicles 300a illustrates a safe and smooth overtaking when a first and a plurality of second vehicles travel on the same road.

Thus, any of the vehicles in the example of vehicles 200a, 300a, 300b may, for example, comprise the apparatus 400 of Figure 4 and/or the computer program 500 of Figure 5 and perform any of the method steps of Figures 1a-c.

Figure 3a illustrates a first vehicle 201 travelling at 110 km/h, driving in the left lane, in the process of overtaking of overtaking vehicles in the right lane travelling at speeds lower than 110 km/h, i.e. 100km/h and 105 km/h, and wherein the speed of the vehicles in the process of being overtaken is repeatedly determined and communicated by the display in the first vehicle 201 so that a real-time update of the speeds of the vehicles being overtaken is provided during the overtaking.

For example, the determined speed of the vehicles travelling in the right lane may be determined by any one of: the first vehicle 201, by the second vehicle, by a completely different vehicle, and by a stationary roadside unit and thereafter communicated to the first vehicle 201.

The vehicle 201 may further comprise controlling circuitry configured for predicting a position and thereby determining a predicted position for the first vehicle in relation to the plurality of second vehicles travelling on the same road before or during an overtaking. The predicted position enables the first vehicle 201 to maintain the speed the first vehicle had before overtaking, i.e. 110 km/h. Hence, the determined predicted position comprises a position between the vehicle travelling at 105 km/h and the vehicle travelling at 115 km/h in order to maintain the speed of 110 km/h. The determined predicted position is communicated by the display in the first vehicle 201 so that the driver is provided with information for efficient planning of the overtaking.

In some embodiments, the vehicle 201 is an autonomous vehicle comprising the controlling circuitry configured for predicting a position and thereby determining a predicted position for the first vehicle in relation to the plurality of second vehicles travelling on the same road before or during an overtaking.

In order to determine at which point in time before or during overtaking is taking place one or more trigger points may set in order to trigger an overtaking mode.

For example, a trigger point for the overtaking mode may comprise approaching a second vehicle travelling on the same road or being approached by a second vehicle travelling on the same road or indicating, e.g. via turn indicators, an overtaking.

Alternatively or additionally, a trigger point for the overtaking mode may comprise an interior camera in the vehicle configured for eye tracking determining that the driver is turning his/her head in a pattern indicative of an upcoming turn, i.e. before activating turn indicators.

Figure 3b is a schematic overview illustrating an example of vehicles travelling on the same road according to some embodiments.

The example of vehicles 300b illustrates a safe and smooth overtaking when a first and a plurality of second vehicles travel on the same road.

Thus, any of the vehicles in the example of vehicles 200a, 300a, 300b may, for example, comprise the apparatus 400 of Figure 4 and/or the computer program 500 of Figure 5 and perform any of the method steps of Figures 1a-c.

Figure 3a illustrates a first vehicle 201 travelling at 110 km/h, driving in the right lane, just before starting the process of overtaking the truck travelling at a speed of 90 km/h. At the same time, a second vehicle travelling in the left lane at a speed of 130 km/h is approaching from behind. The speed of the second vehicle is repeatedly determined and communicated by the display in the first vehicle so that a real-time update is provided before the overtaking.

Alternatively or additionally, a distance in time, e.g. the number of seconds before the second vehicle travelling in the left lane reaches up, may be determined and communicated by the display in the first vehicle so that a real-time updated is provided before the overtaking.

For example, the determined speed of the vehicle travelling in the left lane may be determined by any one of: the first vehicle 201, by the second vehicle, by a completely different vehicle, and by a stationary roadside unit and thereafter communicated to the first vehicle 201.

The vehicle 201 may further comprise controlling circuitry configured for predicting a position and thereby determining a predicted position for the first vehicle in relation to the plurality of second vehicles travelling on the same road before or during an overtaking. The predicted position enables the first vehicle 201 to maintain the speed the first vehicle had before overtaking, i.e. 110 km/h. Hence, the determined predicted position comprises a position in front of the truck travelling at 90 km/h in order to maintain the speed of 110 km/h. The determined predicted position is communicated by the display in the first vehicle 201 so that the driver is provided with information for efficient planning of the overtaking. Therefore, in order for the first vehicle 201 to perform the safe and smooth overtaking and take the determined predicted position, the first vehicle has a time window (i.e. before the vehicle travelling at 130 km/h in the left land catches up with the firs vehicle 201) in which the first vehicle 201 should accelerate to at least 130 km/h and overtake the truck travelling at 90 km/h and take the determined predicted position in front of the truck and maintain the speed of 110 km/h.

In some embodiments, the vehicle 201 is an autonomous vehicle comprising the controlling circuitry configured for predicting a position and thereby determining a predicted position for the first vehicle in relation to the plurality of second vehicles travelling on the same road before or during an overtaking.

In order to determine at which point in time before or during overtaking is taking place one or more trigger points may set in order to trigger an overtaking mode.

For example, a trigger point for the overtaking mode may comprise approaching a second vehicle travelling on the same road or being approached by a second vehicle travelling on the same road or indicating, e.g. via turn indicators, an overtaking.

Alternatively or additionally, a trigger point for the overtaking mode may comprise an interior camera in the vehicle configured for eye tracking determining that the driver is turning his/her head in a pattern indicative of an upcoming turn, i.e. before activating turn indicators.

Figure 4 is a schematic block diagram illustrating an example apparatus according to some embodiments.

The apparatus 400 is for enabling a safe and smooth overtaking when a first and second vehicle travel on the same road.

The apparatus 400 comprises a memory comprising executable instructions, one or more processors configured to communicate with the memory wherein the one or more processors are configured to cause the apparatus to determine a speed of the second vehicle, and communicate, by a display in the first vehicle, the determined speed of the second vehicle.

Thus, the apparatus 400 may, for example, be comprised in any of the vehicles in the example of vehicles 200a, 300a, 300b and perform any of the method steps of Figures 1a-c.

The apparatus 400 comprises a determining module DET 403, e.g. determining circuitry, configured to determine a speed of the second vehicle, and a communicating module COMM 404, e.g. communicating circuitry, configured to communicate the determined speed of the second vehicle and, in some embodiments, a determined predicted position for the first vehicle.

The apparatus 400 is configured to be associated or operatively connected with a radar module RADAR 401a, e.g. radar circuitry, configured to obtain a distance to the second vehicle in front of or behind of and/or at a side of the first vehicle at a first point in time and at a second point in time, a speed module SPEED 402a, e.g. speedometer circuitry, configured to determine the speed of the first vehicle., a vehicle-to-vehicle module V2V 401b, e.g. vehicle-to-vehicle circuitry configured to obtain a distance to the second vehicle in front of or behind of and/or at a side of the first vehicle, a positioning module GPS 402b, e.g. GPS circuitry configured to determine the speed of the first vehicle, and a display module DISPL 401c, e.g. display circuitry configured to communicate the determined speed of the second vehicle and , in some embodiments, a determined predicted position for the first vehicle.

The apparatus 400 may be configured to, in some embodiments, to be associated or operatively connected with a transmitting/receiving module TX/RX 420, e.g. transceiver circuitry, configured to transmit and receive radio signals.

The apparatus 400 may further comprise, in some embodiments, a predicting module PRED 405, e.g. predicting circuitry, configured to determine a predicted position for the first vehicle in relation to the second vehicle before or during overtaking wherein the predicted position enables the first vehicle to maintain the speed the first vehicle had before overtaking.

Figure 5 is a schematic drawing illustrating an example computer readable medium according to some embodiments. The computer program product comprises a non-transitory computer readable medium 500 having thereon a computer program 510 comprising program instructions, wherein the computer program being loadable into a data processing unit and configured to cause execution of the method steps of any of the methods described in connection with Figures 1a-c or otherwise described herein.

Generally, when an arrangement is referred to herein, it is to be understood as a physical product; e.g., an apparatus. The physical product may comprise one or more parts, such as controlling circuitry in the form of one or more controllers, one or more processors, or the like.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a vehicle.

Embodiments may appear within an electronic apparatus (associated with or comprised in a vehicle) comprising arrangements, circuitry, and/or logic according to any of the embodiments described herein. Alternatively or additionally, an electronic apparatus (associated with or comprised in a vehicle) may be configured to perform methods according to any of the embodiments described herein.

According to some embodiments, a computer program product comprises a computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC) 520, which may, for example, be comprised in a vehicle 510. When loaded into the data processing unit, the computer program may be stored in a memory (MEM) 530 associated with or comprised in the data-processing unit. According to some embodiments, the computer program may, when loaded into and run by the data processing unit, cause execution of method steps according to, for example, any of the methods illustrated in Figures 1a-c or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for enabling a safe and smooth overtaking when a first and second vehicle travel on the same road wherein the second vehicle is in front of the first vehicle, the method comprising the following steps:
determining (103) a speed of the second vehicle,
communicating (104), by a display in the first vehicle, the determined speed of the
second vehicle, **characterised in that** the method further comprises the following steps:
determining (105), by controlling circuitry in the first vehicle configured for predicting a position, a predicted position for the first vehicle in relation to the second vehicle during overtaking wherein the predicted position enables the first vehicle to maintain the speed the first vehicle had before overtaking, and
communicating (106), by a display in the first vehicle, the determined predicted position for the first vehicle.

2. The method according to claim 1, the method further comprising repeating the first and second steps (103, 104) so that a real-time update of the speed of the second vehicle is communicated by the display in the first vehicle.

3. The method according to any of claims 1-2, wherein the first and second steps (103, 104) are repeated for a plurality of vehicles in front or behind of and/or at a side of the first vehicle.

4. The method according to any of claims 1-3, wherein the real-time update of the speed of the second vehicle is communicated during overtaking.

5. The method according to any of claims 1-4, the method further comprising the following steps:
obtaining (101a), by a radar arranged on the first vehicle, a distance to the second vehicle in front of or behind of and/or at a side of the first vehicle at a first point in time and at a second point in time, and
determining (102a), by a speedometer arranged on the first vehicle, the speed of the first vehicle.

6. The method according to any of claims 1-4, the method further comprising the following steps:
obtaining (101b), by controlling circuitry in the first vehicle configured to obtain a position through vehicle-to-vehicle communication, a distance to the second vehicle in front of or behind of and/or at a side of the first vehicle, and
determining (102b), by controlling circuitry in the first vehicle configured to determine a speed through GPS, the speed of the first vehicle.

7. The method according to any of claims 5-6, the method further comprising the following step:
determining (103a), by controlling circuitry in the first vehicle configured for calculating a speed, a speed of the second vehicle based on the obtained distance to the second vehicle and the determined speed of the first vehicle.

8. A computer program product comprising a non-transitory computer readable medium, having thereon a computer program comprising program instructions, the computer program being loadable into a data processing unit and configured to cause execution of the method steps according to any of claims 1 through 7 when the computer program is run by the data processing unit.

9. An apparatus for enabling a safe and smooth overtaking when a first (201) and second vehicle (202) travel on the same road wherein the second vehicle is in front of the first vehicle, the apparatus comprising:
a memory comprising executable instructions, one or more processors configured to communicate with the memory wherein the one or more processors are configured to cause the apparatus to:
determine a speed of the second vehicle (202),
communicate, by a display (200b) in the first vehicle (201), the determined speed of the second vehicle (202),
**characterised in that** the one or more processors are further configured to:
determinine, by controlling circuitry in the first vehicle configured for predicting a position, a predicted position for the first vehicle in relation to the second vehicle during overtaking wherein the predicted position enables the first vehicle to maintain the speed the first vehicle had before overtaking, and communicate, by a display in the first vehicle, the determined predicted position for the first vehicle.

10. The apparatus according to claim 9, wherein the one or more processors are further configured to cause the apparatus to repeatedly determine the speed and communicate the determined speed so that a real-time update of the speed of the second vehicle (202) is communicated by the display in the first vehicle (201).

11. The apparatus according to any of claims 9-10, wherein the real-time update of the speed of the second vehicle (202) is communicated during overtaking.

12. A vehicle (201) comprising the apparatus according to any of claims 9-11.

## Patentansprüche

1. Verfahren zum Ermöglichen eines sicheren und reibungslosen Überholens, wenn ein erstes und ein zweites Fahrzeug auf der gleichen Straße fahren, wobei sich das zweite Fahrzeug vor dem ersten Fahrzeug befindet, wobei das Verfahren die folgenden Schritte umfasst:
Bestimmen (103) einer Geschwindigkeit des zweiten Fahrzeugs,
Kommunizieren (104), durch eine Anzeige in dem ersten Fahrzeug, der bestimmten Geschwindigkeit des zweiten Fahrzeugs,
**dadurch gekennzeichnet, dass** das Verfahren ferner die folgenden Schritte umfasst:
Bestimmen (105), durch Steuern eines Schaltkreises in dem ersten Fahrzeug, der zum Vorhersagen einer Position konfiguriert ist, einer vorhergesagten Position für das erste Fahrzeug in Bezug auf das zweite Fahrzeug während des Überholens, wobei die vorhergesagte Position es dem ersten Fahrzeug ermöglicht, die Geschwindigkeit beizubehalten, die das erste Fahrzeug vor dem Überholen hatte, und
Kommunizieren (106), durch eine Anzeige in dem ersten Fahrzeug, der bestimmten vorhergesagten Position für das erste Fahrzeug.

2. Verfahren nach Anspruch 1, wobei das Verfahren ferner das Wiederholen des ersten und des zweiten Schritts (103, 104) umfasst, sodass eine Echtzeitaktualisierung der Geschwindigkeit des zweiten Fahrzeugs durch die Anzeige in dem ersten Fahrzeug kommuniziert wird.

3. Verfahren nach einem der Ansprüche 1-2, wobei der erste und der zweite Schritt (103, 104) für eine Vielzahl von Fahrzeugen vor oder hinter und/oder an einer Seite des ersten Fahrzeugs wiederholt werden.

4. Verfahren nach einem der Ansprüche 1-3, wobei die Echtzeitaktualisierung der Geschwindigkeit des zweiten Fahrzeugs während des Überholens kommuniziert wird.

5. Verfahren nach einem der Ansprüche 1-4, wobei das Verfahren ferner die folgenden Schritte umfasst:
Erhalten (101a), durch ein an dem ersten Fahrzeug angeordnetes Radar, eines Abstands zu dem zweiten Fahrzeug vor oder hinter und/oder an einer Seite des ersten Fahrzeugs zu einem ersten Zeitpunkt und zu einem zweiten Zeitpunkt und
Bestimmen (102a), durch einen Tachometer, der an dem ersten Fahrzeug angeordnet ist, der Geschwindigkeit des ersten Fahrzeugs.

6. Verfahren nach einem der Ansprüche 1-4, wobei das Verfahren ferner die folgenden Schritte umfasst:
Erhalten (101b), durch Steuern eines Schaltkreises in dem ersten Fahrzeug, der konfiguriert ist, um eine Position durch Fahrzeug-zu-Fahrzeug-Kommunikation zu erhalten, eines Abstands zu dem zweiten Fahrzeug vor oder hinter und/oder an einer Seite des ersten Fahrzeugs und
Bestimmen (102b), durch Steuern eines Schaltkreises in dem ersten Fahrzeug, der konfiguriert ist, um eine Geschwindigkeit durch GPS zu bestimmen, der Geschwindigkeit des ersten Fahrzeugs.

7. Verfahren nach einem der Ansprüche 5-6, wobei das Verfahren ferner den folgenden Schritt umfasst:
Bestimmen (103a), durch Steuern eines Schaltkreises in dem ersten Fahrzeug, der zum Berechnen einer Geschwindigkeit konfiguriert ist, einer Geschwindigkeit des zweiten Fahrzeugs basierend auf dem erhaltenen Abstand zu dem zweiten Fahrzeug und der bestimmten Geschwindigkeit des ersten Fahrzeugs.

8. Computerprogrammprodukt, umfassend ein nichtflüchtiges computerlesbares Medium mit einem darauf befindlichen Computerprogramm, das Programmanweisungen umfasst, wobei das Computerprogramm in eine Datenverarbeitungseinheit ladbar und konfiguriert ist, um die Ausführung der Verfahrensschritte nach einem der Ansprüche 1 bis 7 zu veranlassen, wenn das Computerprogramm durch die Datenverarbeitungseinheit ausgeführt wird.

9. Vorrichtung zum Ermöglichen eines sicheren und reibungslosen Überholens, wenn ein erstes (201) und ein zweites Fahrzeug (202) auf der gleichen Straße fahren, wobei sich das zweite Fahrzeug vor dem ersten Fahrzeug befindet, wobei die Vorrichtung Folgendes umfasst:
einen Speicher, umfassend ausführbare Anweisungen, einen oder mehrere Prozessoren, die konfiguriert sind, um mit dem Speicher zu kommunizieren, wobei der eine oder die mehreren Prozessoren konfiguriert sind, um die Vorrichtung zu Folgendem zu veranlassen:
Bestimmen einer Geschwindigkeit des zweiten Fahrzeugs (202), Kommunizieren, durch eine Anzeige (200b) in dem ersten Fahrzeug (201), der bestimmten Geschwindigkeit des zweiten Fahrzeugs (202),
**dadurch gekennzeichnet, dass** der eine oder die mehreren Prozessoren ferner zu Folgendem konfiguriert sind:
Bestimmen, durch Steuern eines Schaltkreises in dem ersten Fahrzeug, der zum Vorhersagen einer Position konfiguriert ist, einer vorhergesagten Position für das erste Fahrzeug in Bezug auf das zweite Fahrzeug während des Überholens, wobei die vorhergesagte Position es dem ersten Fahrzeug ermöglicht, die Geschwindigkeit beizubehalten, die das erste Fahrzeug vor dem Überholen hatte, und
Kommunizieren, durch eine Anzeige in dem ersten Fahrzeug, der bestimmten vorhergesagten Position für das erste Fahrzeug.

10. Vorrichtung nach Anspruch 9, wobei der eine oder die mehreren Prozessoren ferner dazu konfiguriert sind, die Vorrichtung zu veranlassen, die Geschwindigkeit wiederholt zu bestimmen und die bestimmte Geschwindigkeit zu kommunizieren, sodass eine Echtzeitaktualisierung der Geschwindigkeit des zweiten Fahrzeugs (202) durch die Anzeige in dem ersten Fahrzeug (201) kommuniziert wird.

11. Vorrichtung nach einem der Ansprüche 9-10, wobei die Echtzeitaktualisierung der Geschwindigkeit des zweiten Fahrzeugs (202) während des Überholens kommuniziert wird.

12. Fahrzeug (201), umfassend die Vorrichtung nach einem der Ansprüche 9-11.

## Revendications

1. Procédé destiné à permettre un dépassement sûr et fluide lorsqu'un premier et un second véhicule circulent sur la même route dans lequel le second véhicule est devant le premier véhicule, le procédé comprenant les étapes suivantes :
la détermination (103) d'une vitesse du second véhicule,
la communication (104), par un affichage dans le premier véhicule, de la vitesse déterminée du second véhicule,
**caractérisé en ce que** le procédé comprend en outre les étapes suivantes :
la détermination (105), par un circuit de commande dans le premier véhicule configuré pour prédire une position, d'une position prédite pour le premier véhicule par rapport au second véhicule avant et pendant un dépassement dans lequel la position prédite permet au premier véhicule de maintenir la vitesse que le premier véhicule avait avant le dépassement, et
la communication (106), par un affichage dans le premier véhicule, de la position prédite déterminée pour le premier véhicule.

2. Procédé selon la revendication 1, le procédé comprenant en outre la répétition des première et seconde étapes (103, 104) de telle sorte qu'une mise à jour en temps réel de la vitesse du second véhicule est communiquée par l'affichage dans le premier véhicule.

3. Procédé selon l'une quelconque des revendications 1 à 2, dans lequel les première et seconde étapes (103, 104) sont répétées pour une pluralité de véhicules devant ou derrière et/ou sur un côté du premier véhicule.

4. Procédé selon l'une quelconque des revendications 1 à 3, dans lequel la mise à jour en temps réel de la vitesse du second véhicule est communiquée pendant un dépassement.

5. Procédé selon l'une quelconque des revendications 1 à 4, le procédé comprenant en outre les étapes suivantes :
l'obtention (101a), par un radar disposé sur le premier véhicule, d'une distance jusqu'au second véhicule devant ou derrière et/ou sur un côté du premier véhicule à un premier instant et à un second instant, et
la détermination (102a), par un compteur de vitesse disposé sur le premier véhicule, de la vitesse du premier véhicule.

6. Procédé selon l'une quelconque des revendications 1 à 4, le procédé comprenant en outre les étapes suivantes :
l'obtention (101 b), par un circuit de commande dans le premier véhicule configuré pour obtenir une position par communication de véhicule à véhicule, d'une distance par rapport au second véhicule devant ou derrière et/ou sur un côté du premier véhicule, et
la détermination (102 b), par un circuit de commande dans le premier véhicule configuré pour déterminer une vitesse par GPS, de la vitesse du premier véhicule.

7. Procédé selon l'une quelconque des revendications 5 à 6, le procédé comprenant en outre les étapes suivantes :
la détermination (103a), par un circuit de commande dans le premier véhicule configuré pour calculer une vitesse, d'une vitesse du second véhicule sur la base de la distance obtenue par rapport au second véhicule et de la vitesse déterminée du premier véhicule.

8. Produit de programme informatique comprenant un support non transitoire lisible par ordinateur, contenant un programme informatique comprenant des instructions de programme, le programme informatique pouvant être chargé dans une unité de traitement de données et configuré pour permettre l'exécution des étapes du procédé selon l'une quelconque des revendications 1 à 7 lorsque le programme informatique est exécuté par l'unité de traitement de données.

9. Appareil destiné à permettre un dépassement sûr et fluide lorsqu'un premier (201) et un second véhicule (202) circulent sur la même route dans lequel le second véhicule est devant le premier véhicule, l'appareil comprenant :
une mémoire comprenant des instructions exécutables, un ou plusieurs processeurs configurés pour communiquer avec la mémoire dans lequel les un ou plusieurs processeurs sont configurés pour permettre à l'appareil de :
déterminer une vitesse du second véhicule (202), communiquer, par un affichage (200 b) dans le premier véhicule (201), la vitesse déterminée du second véhicule (202),
**caractérisé en ce que** les un ou plusieurs processeurs sont en outre configurés pour :
déterminer, par un circuit de commande dans le premier véhicule configuré pour prédire une position, une position prédite pour le premier véhicule par rapport au second véhicule pendant un dépassement dans lequel la position prédite permet au premier véhicule de maintenir la vitesse qu'avait le premier véhicule avant le dépassement, et
communiquer, par un affichage dans le premier véhicule, la position prédite déterminée pour le premier véhicule.

10. Appareil selon la revendication 9, dans lequel les un ou plusieurs processeurs sont en outre configurés pour permettre à l'appareil de déterminer de manière répétée la vitesse et à communiquer la vitesse déterminée de telle sorte qu'une mise à jour en temps réel de la vitesse du second véhicule (202) est communiquée par l'affichage dans le premier véhicule (201).

11. Appareil selon l'une quelconque des revendications 9 à 10, dans lequel la mise à jour en temps réel de la vitesse du second véhicule (202) est communiquée pendant un dépassement.

12. Véhicule (210) comprenant l'appareil selon l'une quelconque des revendications 9 à 11.
